# EUROPEAN PATENT APPLICATION

(11) **EP 1 365 467 A2**
(43) Date of publication of application: **26.11.2003**
(21) Application number: 03252467.0
(22) Date of filing: 17.04.2003
(51) Int. Cl.: H01M 8/04

(54) **Fuel Cell Power Generation System and Operation Method Therefor**

(30) Priority: 19.04.2002 JP 2002117070
(71) Applicant: Matsushita Electric Industrial Co., Ltd., Katano-Shi, Osaka-fu 576 (JP)
(72) Inventor: Nishida, Kazufumi,, Moriguchi-shi, Osaka 570-0016 (JP); Kosako, Shinya,, Nada-ku Kobe-shi, Hyogo 657-0015 (JP); Ueda, Tetsuya, Kasugai-shi, Aichi 487-0032 (JP); Uchida, Makoto, Hirakata-shi, Osaka 573-1145 (JP)
(74) Representative: Bradley, Josephine Mary

(57) **Abstract**

An aim of the invention is to provide a fuel cell power generation system which can operate in a reduced space to reduce the initial cost and the running cost without deteriorating the performance. In a fuel cell power generation system comprising a fuel cell having an anode, a cathode and a polymer electrolyte membrane, a fuel gas feed pipe for supplying a fuel gas into the anode, an oxidant gas feed pipe for supplying an oxidant gas into the cathode, a reforming unit connected to the fuel gas feed pipe for reforming a raw material gas, a heating unit for heating the reforming unit, a raw material gas supplying unit for supplying the raw material gas into the reforming unit, a water supplying unit for supplying water into the reforming unit, and an air supplying unit for supplying air into the reforming unit, water is introduced into at least one selected from the fuel gas feed pipe, the oxidant gas feed pipe, the cathode and the anode to purge gases retained in the system.

## Description

### BACKGROUND OF THE INVENTION

The present invention relates to a fuel cell power generation system and a method for the operation thereof.

A related art fuel cell power generation system has a configuration as shown in FIG. 5 as disclosed in JP-A-3-257762. In more detail, the fuel cell 1 has an air fan 2 for supplying air into the cathode 1b and a reformer 3 for supplying hydrogen-enriched gas into the anode 1a attached thereto. To a pipe 6 through which a raw material gas is supplied into the reformer 3 is connected a nitrogen supplying unit 5 such as nitrogen bottle via nitrogen feed pipes 8a and 8b having shut-off valves 9a and 9b, respectively. The reformer 3 has a burner 3a provided therein as a heating unit for heating the reformer 3. The pipe 6 has a desulfurizer 7 connected thereto. The hydrogen-enriched gas produced in the reformer 3 is then supplied into the anode 1a of the fuel cell 1 via a pipe 4a. The discharge gas is then introduced into the burner 3a via a pipe 4b.

In order to suspend the power generation operation of this type of a fuel cell power generation system, the supply of the raw material gas into the reformer 3 is suspended. During this process, hydrogen-enriched gas is retained in the path from the reformer 3 to the burner 3a via the pipe 4a, the anode 1a and the pipe 4b. It is thus likely that when natural convection causes air to flow into the path having hydrogen-enriched gas retained therein from the burner 3a, which is open to the atmosphere, hydrogen can explode.

Therefore, in this related art fuel cell power generation system, the shut-off valve 9a is opened during the suspension of power generation operation to introduce nitrogen, which is an inert gas, into the reformer 3 from a nitrogen supplying unit 5 via a nitrogen feed pipe 8a. The nitrogen which has been introduced into the reformer 3 is then supplied into the path to the burner 3a through the pipe 4a, the anode 1a and the pipe 4b. In this manner, the hydrogen-enriched gas retained in the aforementioned path is completely purged so that the retained gas is combusted in the burner 3a.

Thus, in the related art fuel cell power generation system, purging by nitrogen is conducted to prevent possible explosion of hydrogen and secure safety.

However, the related art fuel cell power generation system is required to have a nitrogen supplying unit such as nitrogen bottle for purging by nitrogen. Therefore, when used in a household stationary distributed generation or power supply for electric car, the related art fuel cell power generation system requires a large space, adding to the initial cost of apparatus. It is also necessary that the nitrogen bottle be regularly renewed or nitrogen be regularly replenished, adding to the running cost.

In the case where the fuel cell is a polymer electrolyte type fuel cell, when purging by nitrogen is followed by the suspension of the operation of the fuel cell, the polymer electrolyte membrane dries to shrinkage, deteriorating its adhesivity to the electrode and hence the performance of the cell to disadvantage.

In the light of the aforementioned disadvantages, an aim of the invention is to provide a fuel cell power generation system which can operate in a reduced space to reduce the initial cost and the running cost without deteriorating the performance.

### BRIEF SUMMARY OF THE INVENTION

The invention concerns a fuel cell power generation system comprising a fuel cell having an anode, a cathode and a polymer electrolyte membrane, a fuel gas feed pipe for supplying a fuel gas into the anode, an oxidant gas feed pipe for supplying an oxidant gas into the cathode, a reforming unit connected to the fuel gas feed pipe for reforming a raw material gas, a heating unit for heating the reforming unit, a raw material gas supplying unit for supplying the raw material gas into the reforming unit, a water supplying unit for supplying water into the reforming unit, and an air supplying unit for supplying air into the reforming unit, wherein there is provided a water supplying path connecting at least one selected from the group consisting of the reforming unit, the fuel gas feed pipe, the oxidant gas feed pipe, the cathode and the anode to the water supplying unit and there is provided a controlling unit for introducing water into at least one selected from the group consisting of the reforming unit, the fuel gas feed pipe, the oxidant gas feed pipe, the cathode and the anode.

Preferably, the water supplying unit comprises a carburetor provided therein.

It is also preferable that the controlling unit causes the water supplying unit to introduce water into the fuel gas feed pipe and/or the anode to replace gases retained in the fuel gas feed pipe and/or the anode by water after the suspension of the operation of the fuel cell.

Preferably, the controlling unit causes the water supplying unit to introduce water into at least one of the anode and the cathode to keep the fuel cell power generation system with water retained on at least one of the anode and the cathode between after the suspension of the operation of the fuel cell and before the beginning of the operation of the fuel cell.

It is also preferable that the controlling unit introduces water into at least one of the anode and the cathode to moisten the polymer electrolyte membrane before the beginning of the operation of the fuel cell.

In one preferred embodiment a switching unit is provided midway along the fuel gas feed pipe and a discharge path branched from the fuel gas feed pipe, and the controlling unit supplies water from the water supplying unit into the reforming unit after the suspension of the supply of the raw material gas from the raw gas supplying unit into the reforming unit to introduce water into the fuel gas feed pipe, thereby replacing gases in the gas feed pipe by water, causes the switching unit to operate after the replacement of gases in the gas feed pipe by water to close the path between the switching unit and the fuel cell along the fuel gas feed pipe and open the path from the reforming unit to the discharge path via the switching unit and introduces air from the air supplying unit to the reforming unit after the operation of the switching unit to replace water retained in the path between the reforming unit and the switching unit along the fuel gas feed pipe by air.

In other words, the fuel cell system preferably comprises a first controlling unit for supplying water from the water supplying unit into the reforming unit after the suspension of the supply of a raw material gas from the raw gas supplying unit into the reforming unit to introduce water into the fuel gas feed pipe, thereby replacing gases in the fuel gas feed pipe by water, a second controlling unit for allowing the switching unit to operate after the replacement of gases in the fuel gas feed pipe by water to close the path between the switching unit and the fuel cell along the fuel gas feed pipe and open the path from the reforming unit to the discharge path via the switching unit, and a third controlling unit for introducing air from the air supplying unit to the reforming unit after the operation of the switching unit to replace water retained in the path between the reforming unit and the switching unit along the fuel gas feed pipe by air.

The controlling unit, the first controlling unit, the second controlling unit and the third controlling unit may be integrally formed. In other words, a single controlling unit may perform the roles of all four controlling units.

It is preferable that the fuel cell system comprises an anode discharge gas connecting pipe for introducing gases discharged from the anode of the fuel cell into the heating unit.

Preferably, the fuel cell power generation system comprises a carbon monoxide removing unit disposed midway along the fuel gas feed pipe, a switching unit disposed down the carbon monoxide removing unit along the fuel gas feed pipe and a discharge path branched from the fuel gas feed pipe via the switching unit and the controlling unit supplies water from the water supplying unit into the reforming unit before the beginning of the operation of the fuel cell power generation system to introduce water into the fuel cell, causes the switching unit to operate to close the path between the switching unit and the fuel cell along the fuel gas feed pipe and open the path from the reforming unit to the discharge path via the switching unit, starts the supply of a raw material gas from the raw material gas supplying unit to produce a hydrogen-enriched gas in the reforming unit and causes the switching unit to operate after the rise of the temperature of the carbon monoxide removing unit to a value required to remove carbon monoxide from the hydrogen-enriched gas to close the discharge path and introduce the hydrogen-enriched gas freed of carbon monoxide into the fuel gas feed pipe.

In other words, it is preferable that the fuel cell system comprises a fourth controlling unit for supplying water from the water supplying unit into the reforming unit before the beginning of the operation of the fuel cell power generation system to introduce water into the fuel cell and then allowing the reforming unit to operate to close the path between the switching unit and the fuel cell along the fuel gas feed pipe and open the path from the switching unit to the discharge path via the switching unit, a fifth controlling unit for starting the supply of a raw material gas from the raw material gas supplying unit to produce a hydrogen-enriched gas in the reforming unit, and a sixth controlling unit for allowing the switching unit to operate after the rise of the temperature of the carbon monoxide removing unit to a value required to remove carbon monoxide from the hydrogen-enriched gas to close the discharge path and introduce the hydrogen-enriched gas freed of carbon monoxide into the fuel gas feed pipe.

The controlling unit, the fourth controlling unit, the fifth controlling unit and the sixth controlling unit may be integrally formed. In other words, a single controlling unit may perform the roles of all four controlling units.

It is further preferable that the fuel cell system comprises a shut-off valve disposed at the discharge port of the anode of the fuel cell and the controlling unit closes the shut-off valve after the introduction of water into the fuel cell.

It is also preferable that the fuel cell power generation system comprises an anode discharge gas connecting pipe for introducing gases discharged from the anode into the heating unit.

It is also preferable that the discharge path is connected to the heating unit.

The invention also relates to a method of operating a fuel cell power generation system comprising a fuel cell having an anode, a cathode and a polymer electrolyte membrane, a fuel gas feed pipe for supplying a fuel gas into the anode, an oxidant gas feed pipe for supplying an oxidant gas into the cathode, a reforming unit connected to the fuel gas feed pipe for reforming a raw material gas, a heating unit for heating the reforming unit, a raw material gas supplying unit for supplying the raw material gas into the reforming unit, a water supplying unit for supplying water into the reforming unit, and an air supplying unit for supplying air into the reforming unit, which comprises a step of introducing water into at least one selected from the reforming unit, the fuel gas feed pipe, the oxidant gas feed pipe, the cathode and the anode.

Preferably, the water is hot water or water vapor.

It is also preferable that the method of operating the fuel cell power generation system comprises a step of suspending the operation of the fuel cell and a step of allowing the water supplying unit to introduce water into the fuel gas feed pipe and/or the anode to replace gases retained in the fuel gas feed pipe and/or the anode by water.

More preferably, the method of operating the fuel cell power generation system comprises a step of allowing the water supplying unit to introduce water into at least one of the anode and the cathode to keep the fuel cell power generation system with water retained on at least one of the anode and the cathode between after the suspension of the operation of the fuel cell and before the beginning of the operation of the fuel cell.

It is also preferable that the method of operating the fuel cell power generation system comprises a step of introducing water into at least one of the anode and the cathode to moisten the polymer electrolyte membrane before the beginning of the operation of the fuel cell.

It is also preferable that the fuel cell power generation system comprises a switching unit provided midway along the fuel gas feed pipe and a discharge path branched from the fuel gas feed pipe and the operation method comprises a step of supplying water from the water supplying unit into the reforming unit after the suspension of the supply of a raw material gas from the raw material gas supplying unit into the reforming unit to introduce water into the fuel gas feed pipe, thereby replacing gases in the gas feed pipe by water, a step of allowing the switching unit to operate after the replacement of gases in the gas feed pipe by water to close the path between the switching unit and the fuel cell along the fuel gas feed pipe and open the path from the reforming unit to the discharge path via the switching unit, and a step of introducing air from the air supplying unit to the reforming unit after the operation of the switching unit to replace water retained in the path between the reforming unit and the switching unit along the fuel gas feed pipe by air.

It is also preferable that the fuel cell power generation system comprises a carbon monoxide removing unit disposed midway along the fuel gas feed pipe, a switching unit disposed down the carbon monoxide removing unit along the fuel gas feed pipe and a discharge path branched from the fuel gas feed pipe via the switching unit and that the operation method comprises a step of supplying water from the water supplying unit into the reforming unit before the beginning of the operation of the fuel cell power generation system to introduce water into the fuel cell and then allowing the switching unit to operate to close the path between the switching unit and the fuel cell along the fuel gas feed pipe and open the path from the reforming unit to the discharge path via the switching unit, a step of starting the supply of a raw material gas from the raw material gas supplying unit to produce a hydrogen-enriched gas in the reforming unit, and a step of allowing the switching unit to operate after the rise of the temperature of the carbon monoxide removing unit to a value required to remove carbon monoxide from the hydrogen-enriched gas to close the second discharge path and introduce the hydrogen-enriched gas freed of carbon monoxide into the fuel gas feed pipe.

It is also preferable that the operation method comprises a step of introducing gases discharged from the anode into the heating unit.

It is also preferable that the operation method comprises a step of introducing gases from the discharge path into the heating unit.

It is also preferable that the fuel cell system comprises a shut-off valve disposed at the discharge port of the anode of the fuel cell and the operation method comprises a step of closing the shut-off valve after the introduction of water into the fuel cell.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a schematic diagram illustrating the configuration of a fuel cell according to a first embodiment of the invention.
FIG. 2 is a schematic diagram illustrating the configuration of a fuel cell power generation system according to a second embodiment of the invention.
FIG. 3 is a schematic diagram illustrating the configuration of a fuel cell power generation system according to a third embodiment of the invention.
FIG. 4 is a schematic diagram illustrating the configuration of a fuel cell power generation system according to a reforming of the second embodiment of the invention.

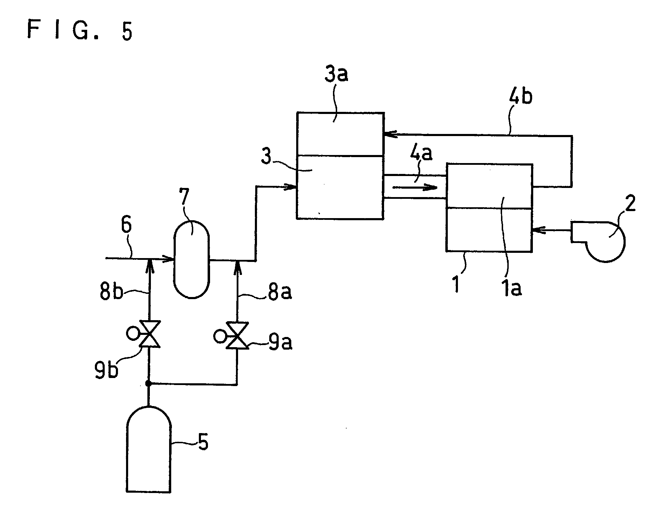

FIG. 5 is a schematic diagram illustrating the configuration of a related art fuel cell power generation system.

### DETAILED DESCRIPTION OF THE INVENTION

The invention concerns a fuel cell power generation system comprising a fuel cell, a unit for supplying a fuel gas into the anode of the fuel cell, a unit for supplying an oxidant gas into the cathode of the fuel cell, and a water supplying unit for supplying water into at least one of the anode and the cathode utilizing the gas feed pipe.

The invention also provides a fuel cell power generation system comprising a reforming unit for reforming a raw material gas, a heating unit for heating the reforming unit, a raw material gas supplying unit for supplying the raw material gas into the reforming unit, a water supplying unit for supplying water into the reforming unit, a unit for supplying air into the reforming unit, and a fuel cell having an anode connected to the reforming unit with a gas feed pipe, which is arranged such that water is supplied from the water supplying unit into the reforming unit to introduce water into the fuel gas feed pipe between the reforming unit and the fuel cell.

The invention further provides a method for the operation of a fuel cell power generation system which comprises a step of introducing water into the anode side to replace the retained gases by water after the suspension of the operation of the fuel cell.

The invention further provides a method for the operation of a fuel cell power generation system which comprises a step of keeping the fuel cell power generation system with water retained in at least one of the anode and the cathode of a fuel cell comprising a polymer electrolyte membrane between after the suspension of the operation and before the beginning of the operation of the fuel cell.

The invention further provides a method for the operation of a fuel cell power generation system which comprises a step of introducing water into at least one of the anode and the cathode before the beginning of a fuel cell comprising a polymer electrolyte membrane to moisten the polymer electrolyte membrane.

The fuel cell power generation system of the invention can employ an operation method which comprises a step of introducing water into the anode side to replace retained gases by water after the suspension of the operation of a fuel cell. In this manner, dangers such as the explosion of a fuel gas retained in the anode side can be eliminated.

The fuel cell power generation system can also employ an operation method comprising a step of keeping the fuel cell power generation system with water retained in at least one of the anode and the cathode of a fuel cell comprising a polymer electrolyte membrane between after the suspension of the operation of the fuel cell and before the beginning of the operation of the fuel cell. In this manner, various defects caused by drying of the polymer electrolyte membrane can be eliminated.

The fuel cell power generation system can further employ an operation method comprising a step of introducing water into at least one of the anode and the cathode before the beginning of the operation of the fuel cell comprising a polymer electrolyte membrane to moisten the polymer electrolyte membrane. In this manner, various defects caused by drying of the polymer electrolyte membrane can be eliminated.

The fuel cell power generation system according to a preferred embodiment of the invention comprises a reforming unit for reforming a raw material gas, a heating unit for heating the reforming unit, a raw material gas supplying unit for supplying the raw material gas into the reforming unit, a water supplying unit for supplying water into the reforming unit, a unit for supplying air into the reforming unit, and a fuel cell having an anode connected to the reforming unit with a gas feed pipe, which is arranged such that water is supplied from the water supplying unit into the reforming unit to introduce water into the fuel gas feed pipe between the reforming unit and the fuel cell.

The fuel cell power generation system preferably further comprises a controlling unit for supplying water from the water supplying unit into the reforming unit before the beginning of the operation of the fuel cell power generation system to introduce water the gas feed pipe between the reforming unit and the fuel cell.

The fuel cell power generation system according to another preferred embodiment of the invention comprises a switching unit provided midway along the fuel gas feed pipe and a discharge path branched from the fuel gas feed pipe via the switching unit, wherein there are provided a first controlling unit for supplying water from the water supplying unit into the reforming unit after the suspension of the supply of a raw material gas from the raw gas supplying unit into the reforming unit to introduce water into the fuel gas feed pipe, thereby replacing gases in the fuel gas feed pipe by water, a second controlling unit for allowing the switching unit to operate after the replacement of gases in the fuel gas feed pipe by water to close the path between the switching unit and the fuel cell along the fuel gas feed pipe and open the path from the reforming unit to the discharge path via the switching unit, and a third controlling unit for introducing air from the air supplying unit to the reforming unit after the operation of the switching unit to replace water retained in the path between the reforming unit and the switching unit along the fuel gas feed pipe by air.

The above reforming unit preferably causes a reforming reaction by a steam reforming process.

The pipe connecting between the anode of the fuel cell and the switching unit is made of a non-metallic corrosion-resistant material such as fluororesin, e.g., polytetrafluoroethylene.

Preferably, an anode discharge gas connecting pipe is provided for introducing gases discharged from the anode of the fuel cell into the heating unit.

The fuel cell power generation system according to another preferred embodiment of the invention comprises a carbon monoxide removing unit disposed midway along the fuel gas feed pipe, a switching unit disposed down the carbon monoxide removing unit along the fuel gas feed pipe and a discharge path branched from the fuel gas feed pipe via the switching unit, wherein there are provided a forth controlling unit for supplying water from the water supplying unit into the reforming unit before the beginning of the operation of the fuel cell power generation system to introduce water into the fuel cell and then allowing the switching unit to operate to close the gas feed pipe between the switching unit and the fuel cell and open the path from the reforming unit to the discharge path via the switching unit, a fifth controlling unit for starting the supply of a raw material gas from the raw material gas supplying unit to produce a hydrogen-enriched gas in the reforming unit, and a sixth controlling unit for allowing the switching unit to operate after the rise of the temperature of the carbon monoxide removing unit to a value required to remove carbon monoxide from the hydrogen-enriched gas to close the discharge path, thereby introducing the hydrogen-enriched gas freed of carbon monoxide into the gas feed pipe.

The discharge path is preferably connected to the heating unit.

According to a further preferred embodiment, the fuel cell power generation system of the invention comprises a shut-off valve disposed at the discharge port of the anode of the fuel cell, wherein the above-mentioned controlling unit is capable of supplying water from the water supplying unit into the reforming unit after the suspension of the supply of a raw material gas from the raw gas supplying unit into the reforming unit to introduce water into the fuel gas feed pipe, thereby replacing gases in the fuel gas feed pipe by water, allowing the switching unit to operate after the replacement of gases in the fuel gas feed pipe by water to close the path between the switching unit and the fuel cell along the fuel gas feed pipe and open the path from the reforming unit to the discharge path via the switching unit, and introducing air from the air supplying unit to the reforming unit after the operation of the switching unit to replace water retained in the path between the reforming unit and the switching unit along the fuel gas feed pipe by air, and a controlling unit for closing the shut-off valve after the introduction of water into the fuel cell.

Embodiments of the invention will be described hereinafter with reference to the attached drawings.

### (1) Fuel cell

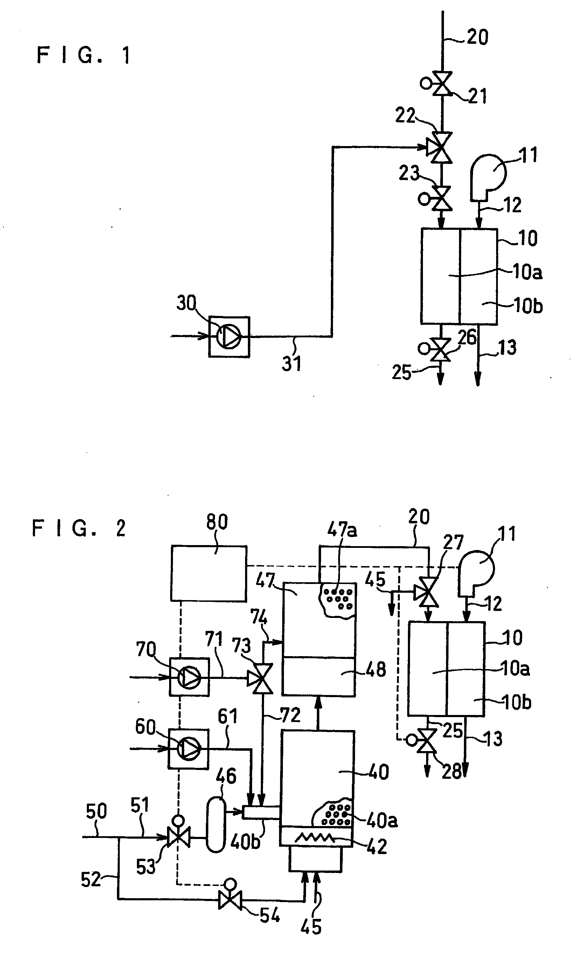

FIG. 1 illustrates the structure of an embodiment of the fuel cell which can be used in the invention. The present embodiment employs a polymer electrolyte type fuel cell.

A fuel cell 10 has a cathode 10b connected to an oxidant gas feed pipe 12 and a discharge pipe 13 at the inlet and outlet thereof, respectively. To the oxidant gas feed pipe 12 is connected an air fan 11. On the other hand, the fuel cell has an anode 10a connected to a fuel gas feed pipe 20 made of a corrosion-resistant material such as polytetrafluoroethylene at the inlet thereof. Provided inside the fuel cell 10 is an electrode catalyst (not shown) for causing power generation reaction to proceed. The fuel gas feed pipe 20 comprises a fuel gas feed valve 21, a three-way valve 22 and a shut-off valve 23 provided therein. To the three-way valve 22 is connected a pipe 31 having a water pump 30 as a water supplying unit. The three-way valve 22 is preferably disposed as close to the fuel cell 10 as possible. The piping from the three-way valve 22 to the anode 10a of the fuel cell 10 is preferably as short as possible. To the outlet of the anode 10a is connected a discharge pipe 25 the end of which is open to the exterior. The discharge pipe 25 has a shut-off valve 26 provided midway on the length thereof.

Though not shown, provided up the fuel gas feed pipe 20 are, e.g., a reforming unit for reforming a raw material gas, a heating unit for heating the reforming unit, and a raw material gas supplying unit for supplying a raw material gas into the reforming unit.

The operation of the fuel cell at starting time will be described hereinafter. Firstly, in order to start the operation of the fuel cell, the shut-off valve 23 and the shut-off valve 26 are opened so that the route of the piping from the three-way valve 22 to the anode 10a of the fuel cell 10 is opened to the exterior. During this process, the three-way valve 22 closes the path to the fuel gas feed valve 21 and opens the path to the water pump 30. Then, the water pump 30 is operated to introduce water into the anode 10a of the fuel cell 10 via the three-way valve 22 and the fuel gas feed pipe 20. The water which has thus been introduced into the anode 10a of the fuel cell 10 provides the polymer electrolyte membrane with moisture high enough to allow the performance of the polymer electrolyte membrane. The water is then discharged to the exterior from the anode 10a of the fuel cell 10. During this process, even when hydrogen-enriched gases or raw material gases are retained in the anode 10a of the fuel cell, these retained gases can be discharged with water so far as water has been supplied in an amount great enough to purge them from the anode 10a of the fuel cell. The water thus supplied also exerts an effect of washing impurities away.

Thereafter, the three-way valve 22 is operated to close the path from the three-way valve 22 to the water pump 30 and open the path from the three-way valve 22 to the fuel gas feed valve 21. At the same time, the fuel gas feed valve 21 is opened to supply the fuel gas into the anode 10a of the fuel cell 10.

The operation of the fuel cell during operation will be described hereinafter. The fuel gas is supplied into the anode 10a of the fuel cell 10 while air is supplied as an oxidant gas into the cathode 10b of the fuel cell 10 from the air fan 11. In the fuel cell 10, hydrogen in the fuel gas supplied into the anode 10a and oxygen in the air supplied into the cathode 10b react with each other to cause power generation. The fuel gas left unreacted is then discharged as an anode discharge gas from the anode 10a of the fuel cell via the discharge pipe 25. The air left unreacted is then discharged from the cathode 10b of the fuel cell via the discharge pipe 13.

In order to suspend the operation of the fuel cell, the fuel gas feed valve 21 is closed to suspend the supply of the fuel gas. Subsequently, the three-way valve 22 is operated to close the path from the three-way valve 22 to the fuel gas feed valve 21 and open the path from the three-way valve 22 to the water pump 30. The water pump 30 is then operated to supply water from the water pump 30 into the anode 10a of the fuel cell 10. The water which has thus been introduced into the anode 10a of the fuel cell is discharged to the exterior from the anode 10a of the fuel cell with the retained fuel gas. In this operation, the fuel gas retained in the anode 10a of the fuel cell is purged with water.

Thereafter, the supply of water by the water pump 30 is suspended to suspend the supply of water into the anode 10a of the fuel cell 10. At the same time, the shut-off valve 23 and the shut-off valve 26 are closed so that water is retained in the path from the shut-off valve 23 to the shut-off valve 26 via the anode 10a of the fuel cell 10. By keeping the fuel cell under these conditions, the polymer electrolyte membrane can be prevented from being dried and shrunk, making it possible to prevent the deterioration of its adhesivity to the electrode (not shown).

Thus, while the fuel cell according to the present embodiment is under suspension, water is kept retained in the path from the shut-off valve 23 to the anode 10a of the fuel cell 10. Nevertheless, since the piping from the shut-off valve 23 to the fuel cell 10 is made of a non-metallic corrosion-resistant material such as fluororesin, it is not likely that metal ions can be eluted to give adverse effects on the polymer electrolyte membrane. The length of the piping is predetermined short enough to cause no cost rise even if the piping is made of a fluororesin.

The fuel cell having the aforementioned constitution doesn't suffer from the drying of the polymer electrolyte membrane and thus hardly exhibits deterioration of performance and hence a raised reliability.

While the embodiment 1 has been described with reference to the case where water is supplied into the anode 10a of the fuel cell 10, water may be supplied into the cathode 10b of the fuel cell 10 to exert similar effects. Alternatively, water may be supplied into both the anode 10a and the cathode 10b of the fuel cell 10 to exert better effects.

### (2) Concerning the fuel cell power generation system

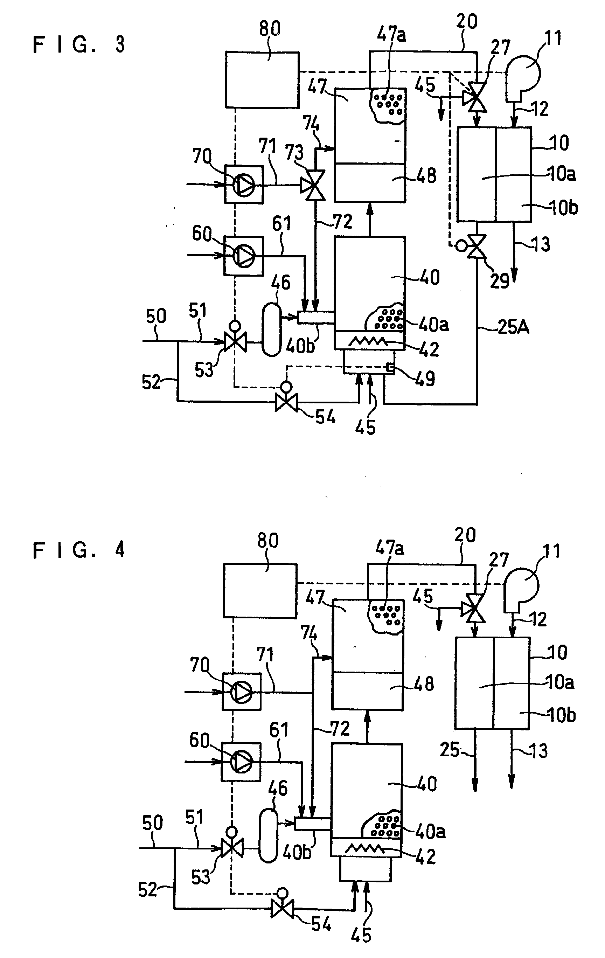

FIG. 2 illustrates the configuration of an embodiment of the fuel cell power generation system according to the invention. This fuel cell power generation system comprises substantially the same fuel cell as shown in FIG. 1.

Accordingly, a fuel cell 10 has a cathode 10b connected to an oxidant gas feed pipe 12 and a discharge pipe 13 at the inlet and the outlet thereof, respectively. To the oxidant gas feed pipe 12 is connected an air fan 11. On the other hand, the fuel cell 10 has an anode 10a connected to a fuel gas feed pipe 20 made of a corrosion-resistant material such as polytetrafluoroethylene at the inlet thereof. Provided in the fuel cell 10 is an electrode catalyst (not shown) for causing power generation reaction to proceed. The fuel gas feed pipe 20 has a fuel gas feed valve 21, a three-way valve 22 and a shut-off valve 23 provided therein. To the three-way valve 22 is connected a pipe 31 having a water pump 30 as a water supplying unit. The three-way valve 22 is preferably disposed as close to the fuel cell 10 as possible. The length of the piping from the three-way valve 22 to the anode 10a of the fuel cell 10 is preferably as short as possible. To the outlet of the anode 10a is a discharge pipe 25 the end of which is open to the exterior. The discharge pipe 25 has a shut-off valve 26 provided midway on the length thereof.

Provided up the fuel gas feed pipe 20 are, e.g., a reformer 40 as a reforming unit for reforming a raw material gas. The interior of the reformer 40 is filled with a reforming catalyst 40a for causing reforming reaction to proceed. The reformer 40 is provided with a burner 42 as a heating unit. The reformer 40 has a raw material gas feed pipe 50 having a desulfurizer 46 and a raw material gas feed valve 53 connected thereto at an inlet 40b. To the raw material gas feed pipe 50 is connected a pipe 52 branched from the upstream of the raw material gas feed valve 53. The pipe 52 is connected to the burner 42 of the reformer 40 via a shut-off valve 54.

The reformer 40 has a water feed pipe 61 having a water pump 60 connected thereto at an inlet 40b as a water supplying unit so that water flows together with the raw material gas. To the inlet 40b is connected an air feed pipe 71 having an air pump 70 as an air supplying unit via one outlet pipe 72 of the three-way valve 73. The other outlet pipe 74 of the three-way valve 73 is connected to a carbon monoxide remover 47 as a carbon monoxide removing unit.

The reformer 40 has a carbon monoxide remover 47 connected thereto downstream. The interior of the carbon monoxide remover 47 is filled with a carbon monoxide removing catalyst 47a for causing carbon monoxide removal reaction to proceed. Provided between the reformer 40 and the carbon monoxide remover 47 is a transformer 48 for reducing the concentration of carbon monoxide to some extent by shifting reaction. The transformer can be called shifter, shifting unit or the like.

The inlet of the anode 10a of the fuel cell 10 shown in FIG. 2 is connected to one outlet of a three-way valve 27 as a switching unit. The fuel cell shown in FIG. 2 differs from that shown in FIG. 1 in this respect. The other constitutions of the fuel cell 10 are the same as shown in FIG. 1.

The container (or chamber) of the reformer 40, the container (or chamber) of the carbon monoxide remover 47, the three-way valve 27, and the piping from the reformer 40 to the three-way valve 27 are all made of stainless steel SUS316.

A controller 80 which is a controlling unit controls the raw material gas feed valve 53, the shut-off valve 54, the burner 42, the water pump 60, the air pump 70, the air fan 11, the three-way valve 27, 73, the shut-off valve 28, etc. when the system is in operation or suspension. Accordingly, the controller 80 comprises a computer having a hardware such as a memory, an arithmetic processor and an interface, though not shown. The memory has a recording medium reader (not shown) for reading programs received in recording media such as flexible disk, hard disk, CD-ROM and RAM card. The controller 80 has the raw material gas feed valve 53, the shut-off valve 54, the burner 42, the water pump 60, the air pump 70, the air fan 11, the three-way valve 27, the three-way valve 73, the shut-off valve 28, etc. electrically connected thereto.

The operation of the fuel cell power generation system at starting time will be described hereinafter. Firstly, in order to start the operation of the operation of the fuel cell power generation system, the controller 80 gives a command (or instruction) that the water pump 60 should operate to introduce water from the inlet 40b into the reformer 40. The controller 80 gives a command that the shut-off valve 28 should be opened to open the fuel feed pipe 20 (also broadly referred to as "fuel path") from the reformer 40 to the outlet of the anode 10a via the transformer 48, the carbon monoxide remover 47 and the three-way valve 27 to the exterior. During this process, the three-way valve 27 closes the discharge path 45 and opens the path from the three-way valve 27 to the anode 10a of the fuel cell 10. The water which has thus been introduced into the reformer 40 is then introduced into the anode 10a. The water which has thus been introduced into the anode 10a of the fuel cell 10 provides the polymer electrolyte membrane with moisture high enough to allow the performance of the polymer electrolyte membrane. The water is then discharged from the anode 10a of the fuel cell 10 to the exterior. During this process, even when hydrogen-enriched gases or raw material gases are retained in the fuel gas feed pipe 20 and the anode 10a of the fuel cell, these retained gases can be discharged with water so far as water has been supplied in an amount great enough to purge them from the interior of the fuel gas feed pipe 20. The water thus supplied also exerts an effect of washing impurities away.

In this embodiment, water may be heated by the burner 42 disposed adjacent to the reformer 40 so that hot water or water vapor is introduced into the fuel gas feed pipe 20. This control, too, may be effected by the controller 80.

Thereafter, the controller 80 gives a command that the shut-off valve 28 should be closed. When the shut-off valve 28 is closed, retained water is enclosed in the fuel gas feed pipe 20.

Subsequently, the controller 80 gives a command that the shut-off valve 54 should be opened to introduce a raw material gas into the burner 42. The burner 42 catches fire at the same time with the introduction of the raw material gas to heat the reformer 40. Subsequently, the controller 80 gives a command that the raw material gas feed valve 53 should be opened to introduce a raw material gas such as hydrocarbon into the desulfurizer 46. The raw material gas which has thus been introduced into the desulfurizer 46 is freed of sulfur content constituting odorant component, and then supplied from the inlet 40b into the reformer 40. The raw material gas which has been supplied into the reformer 40 and the water vapor which has been generated by heating water supplied over the burner 42 then pass through the reforming catalyst 40a to cause reforming reaction that produces hydrogen-enriched gas.

The hydrogen-enriched gas thus produced is introduced into the transformer 48 where it is then freed of carbon monoxide to some extent. Thereafter, the hydrogen-enriched gas is passed to the carbon monoxide remover 47. The controller 80 then causes the air pump 70 to start to pass air to the carbon monoxide remover 47 via the three-way valve 73. Carbon monoxide contained in the hydrogen-enriched gas is selectively oxidized over the carbon monoxide removing catalyst 47a inside the carbon monoxide remover 47 so that it is removed. During this process, the three-way valve 73 closes the path from the three-way valve 73 to the inlet 40b of the reformer 40 and opens the path from the three-way valve 73 to the carbon monoxide remover 47, making it possible to prevent air from being passed to the reforming catalyst.

In the initial stage of the reforming reaction, the temperature in the reformer 40 has not been thoroughly raised. Thus, the reforming reaction doesn't proceed thoroughly. Accordingly, hydrogen is not produced in an amount greater enough to cause power generation reaction in the fuel cell 10. Further, since the temperature in the reformer 40 has not been thoroughly raised, the temperature in the carbon monoxide remover 47 is not thoroughly raised. Thus, the carbon monoxide remover 47a doesn't function sufficiently. Accordingly, the hydrogen-enriched gas which has been produced in the initial stage of the reforming reaction in the reformer 40 contains carbon monoxide in a high concentration (about 5%) at the outlet of the carbon monoxide remover 47 even if it has been passed through the transformer 48. This hydrogen-enriched gas which has thus been produced in the initial stage of the reforming reaction not only disables the fuel cell 10 to give sufficient power output but also poisons the catalyst of the fuel cell 10. In particular, a polymer electrolyte type fuel cell shows this tendency because it operates at a low reaction temperature.

To cope with this phenomenon, the controller 80 causes the three-way valve 27 to operate before the production of hydrogen-enriched gas, i.e., before the opening of the raw material gas feed valve 53 to close the path from the three-way valve 27 to the anode 10a of the fuel cell 10 and open the discharge path 45. During this process, water vapor is kept retained in the anode 10a of the fuel cell 10. The hydrogen-enriched gas which has been produced is immediately supplied via the discharge path 45 into the burner 42 where it is then combusted with the raw material gas until the temperature in the reformer 40 and the carbon monoxide remover 47 are thoroughly raised, e.g., until the temperature in the reformer 40 reaches 700°C and the temperature in the carbon monoxide remover 47 reaches 150°C.

Thereafter, when a temperature sensor (not shown) in the reformer 40 detects that the temperature in the reformer 40 reaches a value required for reforming and a temperature sensor (not shown) in the carbon monoxide remover 47 detects that the temperature of the carbon monoxide removing catalyst 47a in the carbon monoxide remover 47 reaches a value required for the removal of carbon monoxide, the controller 80 causes the three-way valve 27 to operate to close the discharge path 45 and open the fuel gas feed pipe 20 from the three-way valve 27 to the anode 10a of the fuel cell 10. At the same time, the controller 80 opens the shut-off valve 28 so that the hydrogen-enriched gas which has been thoroughly freed of carbon monoxide in the carbon monoxide remover 47a is supplied into the anode 10a of the fuel cell 10.

The operation of the fuel cell power generation system in operation will be described hereinafter. A hydrogen-enriched gas is supplied into the anode 10a of the fuel cell 10 while air from the air fan 11 is supplied into the cathode 10b of the fuel cell 10 by a command given by the controller 80. In the fuel cell 10, hydrogen in the hydrogen-enriched gas which has been supplied into the anode 10a and oxygen in the air which has been supplied into the cathode 10b react with each other to cause power generation. The hydrogen-enriched gas left unreacted is then discharged as an anode discharge gas from the outlet of the anode 10a of the fuel cell 10 via the discharge pipe 25. The air left unreacted is then discharged from the cathode 10b of the fuel cell 10 via the discharge pipe 13.

The operation for suspending the operation of the fuel cell power generation system will be described hereinafter. Firstly, the controller 80 gives a command that the raw material gas feed valve 53 should be closed to suspend the supply of a raw material gas. At the same time, the shut-off valve 54 is closed to suspend heating by the burner 42. During this process, the operation of the water pump 60 is not suspended. Thus, water which has been supplied from the water pump 60 then enters into the reformer 40. The water which has been introduced into the reformer 40 is passed to the fuel path via which it is then discharged to the exterior with the retained hydrogen-enriched gas from the outlet of the anode 10a of the fuel cell 10. In this operation, the hydrogen-enriched gas retained in the fuel gas feed pipe 20 is purged by water. During this process, the air pump 70 is ordered by the controller 80 to suspend its operation so that air is not introduced into the fuel gas feed pipe 20.

Thereafter, the controller 80 causes the water pump 60 to suspend the supply of water into the fuel gas feed pipe 20. Subsequently, the controller 80 causes the three-way valve 27 to operate to close the path from the three-way valve 27 to the inlet of the anode 10a of the fuel cell 10 and open the path from the three-way valve 27 to the discharge path 45. At the same time, the controller 80 causes the shut-off valve 28 to be closed so that water is retained in the path from the three-way valve 27 to the shut-off valve 28 via the anode 10a of the fuel cell 10. By keeping the fuel cell under these conditions, the polymer electrolyte membrane can be prevented from being dried and shrunk, making it possible to prevent the deterioration of its adhesivity to the electrode.

Subsequently, the controller 80 causes the three-way valve 73 to operate to close the path from the three-way valve 73 to the carbon monoxide remover and open the path from the three-way valve 73 to the inlet 40b of the reformer 40. The controller 80 then causes the air pump 70 to operate again to supply air into the inlet 40b of the reformer 40. The air which has been introduced into the inlet 40b of the reformer 40 purges water retained in the fuel path from the reformer 40 to the three-way valve 27 via the transformer 48 and the carbon monoxide remover 47, and is then discharged to the exterior via the discharge path 45 and the burner 42.

Thus, when the operation of the fuel cell power generation system according to the present embodiment is suspended, water is kept retained in the fuel gas feed pipe 20 from the three-way valve 27 to the anode 10a of the fuel cell 10. Nevertheless, since the piping from the three-way valve 27 to the fuel cell 10 is made of a non-metallic corrosion-resistant material such as fluororesin, it is not likely that metal ions can be eluted to give adverse effects on the polymer electrolyte membrane. The length of the piping is predetermined short enough to cause no cost rise even if the piping is made of a fluororesin. The fuel gas feed pipe 20 is all made of a fluororesin instead of using the three-way valve 27. However, this arrangement drastically adds to cost and thus is not practical.

By thus purging the hydrogen-enriched gas from the fuel gas feed pipe 20 between the reformer 40 and the anode 10a of the fuel cell 10 by water rather than by air, the formation of interface of hydrogen-enriched gas with air where a mixture of hydrogen and oxygen within explosion limit can be produced can be prevented, thereby avoiding the danger of explosion in a high temperature atmosphere in the reformer 40.

However, when the hydrogen-enriched gas is purged directly by air in the fuel gas feed pipe 20, a mixture of hydrogen and oxygen within explosion limit can be produced on the interface of hydrogen-enriched gas with air. This mixed gas can explode when it passes through the reformer 40 while being exposed to a high temperature atmosphere.

In the case where hydrogen-enriched gas is not purged by water through the path from the reformer 40 to the three-way valve 27 via the carbon monoxide remover 47, even if the devices and piping in the path are made of stainless steel SUS316 as mentioned above, when water is retained in the path over an extended period of time, metallic ions (Fe, Ni, Cr, etc.) are eluted with the water, though slightly. The metallic ions thus eluted are then adsorbed by the polymer electrolyte membrane of the anode 10a together with the hydrogen-enriched gas or water during the subsequent operation or suspension. The polymer electrolyte membrane thus having metallic ions, which are cations, adsorbed thereto becomes less able to transmit a proton, which is a cation, to the cathode.

By preventing water retained in the fuel cell 10 from being replaced by air, the polymer electrolyte membrane can be protected from drying. Accordingly, even after the suspension of the operation of the polymer electrolyte type fuel cell power generation system, water is retained in the anode 10a of the fuel cell 10. making it possible to prevent the polymer electrolyte membrane from being dried and shrunk and hence prevent the deterioration of its adhesivity to the polymer electrolyte membrane.

The fuel cell power generation system having the aforementioned constitution requires no nitrogen facility for purging and thus can provide a fuel cell which can operate in a reduced space at a reduced initial cost and running cost. The fuel cell power generation system also suffers no problem of drying of polymer electrolyte membrane and thus can provide a fuel cell which can operate with a high reliability and little deterioration of performance.

FIG. 3 illustrates the configuration of another embodiment of the fuel cell power generation system according to the invention. This fuel cell power generation system has substantially the same configuration as that of FIG. 2.

In some detail, fuel cell 10 has a cathode 10b connected to an oxidant gas feed pipe 12 and a discharge pipe 13 at the inlet and the outlet thereof, respectively. To the oxidant gas feed pipe 12 is connected an air fan 11. On the other hand, fuel cell 10 has an anode 10a connected to a fuel gas feed pipe 20 made of a corrosion-resistant material such as polytetrafluoroethylene at the inlet thereof. Provided in the fuel cell 10 is an electrode catalyst (not shown) for causing power generation reaction to proceed. The fuel gas feed pipe 20 has a fuel gas feed valve 21, a three-way valve 22 and a shut-off valve 23 provided therein. To the three-way valve 22 is connected a pipe 31 having a water pump 30 as a water supplying unit. The three-way valve 22 is preferably disposed as close to the fuel cell 10 as possible. The length of the piping from the three-way valve 22 to the anode 10a of the fuel cell 10 is preferably as short as possible. To the outlet of the anode 10a is a discharge pipe 25 the end of which is open to the exterior. The discharge pipe 25 has a shut-off valve 26 provided midway on the length thereof.

Provided at the upstream side from the fuel gas feed pipe 20 are, e.g., a reformer 40 as a reforming unit for reforming a raw material gas. The interior of the reformer 40 is filled with a reforming catalyst 40a for causing reforming reaction to proceed. The reformer 40 is provided with a burner 42 as a heating unit. The reformer 40 has a raw material gas feed pipe 50 having a desulfurizer 46 and a raw material gas feed valve 53 connected thereto at an inlet 40b. To the raw material gas feed pipe 50 is connected a pipe 52 branched from the upstream of the raw material gas feed valve 53. The pipe 52 is connected to the burner 42 of the reformer 40 via a shut-off valve 54.

The reformer 40 has a water feed pipe 61 having a water pump 60 connected thereto at an inlet 40b as a water supplying unit so that water flows together with the raw material gas. To the inlet 40b is connected an air feed pipe 71 having an air pump 70 as an air supplying unit via one outlet pipe 72 of the three-way valve 73. The other outlet pipe 74 of the three-way valve 73 is connected to a carbon monoxide remover 47 as a carbon monoxide removing unit.

The reformer 40 has a carbon monoxide remover 47 connected thereto downstream. The interior of the carbon monoxide remover 47 is filled with a carbon monoxide removing catalyst 47a for causing carbon monoxide removal reaction to proceed. Provided between the reformer 40 and the carbon monoxide remover 47 is a transformer 48 for reducing the concentration of carbon monoxide to some extent.

The inlet of the anode 10a of the fuel cell 10 shown in FIG. 2 is connected to one outlet of a three-way valve 27 as a switching unit. The fuel cell shown in FIG. 2 differs from that shown in FIG. 1 in this respect. The other constitutions of the fuel cell 10 are the same as shown in FIG. 1.

The container of the reformer 40, the container of the carbon monoxide remover 47, the three-way valve 27, and the piping from the reformer 40 to the three-way valve 27 are all made of stainless steel SUS316.

A controller 80 which is a controlling unit controls the raw material gas feed valve 53, the shut-off valve 54, the burner 42, the water pump 60, the air pump 70, the air fan 11, the three-way valve 27, 73, the shut-off valve 28, etc. when the system is in operation or suspension. Accordingly, the controller 80 comprises a computer having a hardware such as a memory, an arithmetic processor and an interface, though not shown. The memory has a recording medium reader (not shown) for reading programs received in recording media such as flexible disk, hard disk, CD-ROM and RAM card. The controller 80 has the raw material gas feed valve 53, the shut-off valve 54, the burner 42, the water pump 60, the air pump 70, the air fan 11, the three-way valve 27, the three-way valve 73, the shut-off valve 28, etc. electrically connected thereto.

The fuel cell power generation system is characterized in that the anode 10a of the fuel cell 10 has an anode discharge gas connecting pipe 25A one end of which is connected to the outlet thereof. The other end of the anode discharge gas connecting pipe 25A is connected to the burner 42. Provided up the burner 42 is a hydrogen sensor 49 which is electrically connected to the controller 80. When the hydrogen concentration detected by the hydrogen sensor 49 falls to or below the explosion limit, a signal is transmitted to the controller 80.

Referring to the operation at starting time, the fuel cell power generation system of the present embodiment differs from that of the embodiment 2 in that the introduction of water into the fuel cell 10 is followed by the closure of the shut-off valve 29 of the pipe 25A connected to the outlet of the anode 10a of the fuel cell 10. Further, when the three-way valve 27 operates to introduce hydrogen-enriched gas into the anode 10a of the fuel cell 10, the controller 80 opens the shut-off valve 29. In this manner, the initial hydrogen-enriched gas can be prevented from flowing backward to the anode 10a of the fuel cell 10 via the discharge path 45 and the burner 42. The other operations at starting time are the same as in the embodiment 2.

During the subsequent operation, most of the hydrogen atoms contained in the hydrogen-enriched gas introduced into the anode 10a of the fuel cell 10 is consumed by the power generation reaction while some part of the hydrogen-enriched gas is retained and then discharged from the anode 10a as an anode discharge gas. This anode discharge gas is introduced from the anode discharge gas connecting pipe 25A into the burner 42 where it is then combusted with the raw material gas.

In this manner, the anode discharge gas can be effectively used to heat the reformer, making it possible to enhance the efficiency of the fuel cell power generation system.

The operation of the fuel cell power generation system in suspension will be described hereinafter. As in the embodiment 2, the hydrogen-enriched gas retained in the fuel gas feed pipe 20 and the anode discharge gas connecting pipe 25A is replaced by water. The retained hydrogen-enriched gas thus replaced is supplied from the anode discharge gas connecting pipe 25A into the burner 42 where it is then combusted.

Thereafter, the controller 80 gives a command that the shut-off valve 54 should be closed. When the shut-off valve 54 is closed, the supply of the raw material gas into the burner 42 is suspended so that only retained hydrogen contained in the anode discharge gas is combusted as a fuel.

Accordingly, when purging by water proceeds to an extent such that the anode discharge gas no longer contains retained hydrogen or contains retained hydrogen in an amount falling below the explosion limit, the burner 42 is extinguished. During this process, the hydrogen sensor 49 transmits a signal to the controller 80. Thereafter, the controller 80 causes the water pump to be suspended and the three-way valve 27 to operate to open the path from the reformer 40 to the burner 42 via the transformer 48 and the carbon monoxide remover 47. At the same time, the controller 80 causes the shut-off valve 29 to be closed. The controller 80 causes the air pump 70 to start to introduce air into the reformer 40. The air thus introduced then replaces water retained in the reformer 40, the transformer 48 and the carbon monoxide remover 47 and in the path from the carbon monoxide remover 47 to the three-way valve 27, and then is discharged to the exterior from the burner 42.

During this process, since the shut-off valve 29 is closed, the air which has been introduced into the reformer 40 doesn't flow into the anode 10a of the fuel cell 10 through the anode discharge gas connecting pipe 25, preventing the polymer electrolyte membrane from being dried.

In this arrangement, the hydrogen retained in the fuel path can be completely combusted without being discharged to the exterior, making it unlikely that hydrogen can be carelessly retained outside the fuel cell power generation system and hence making it possible to enhance safety.

While the fuel cell power generation system shown in FIG. 3 has been described with reference to the case where the hydrogen sensor 49 detects that the hydrogen concentration is sufficiently low and transmits a signal to the controller 80, the same effect can be exerted even if a flame detector (not shown) is provided in the vicinity of the burner 42 instead of the hydrogen sensor 49 to detect the extinction and transmits a signal to the controller. Alternatively, even when neither hydrogen sensor 49 nor flame detector is provided, the absence of hydrogen can be certainly confirmed also by visually observing the extinction and then depressing a button (not shown) to transmit a command for subsequent operation to the controller, making it possible to exert the same effect as mentioned above.

While the foregoing description has been made with reference to the case where the three-way valve 27 is used as a switching unit, the invention is not limited to three-way valve. For example, a plurality of two-way valves may be used in combination to switch between the paths. Any switching units may be used to exert the same effect so far as switching can be made between two paths under the command from the controller 80.

While the present embodiment has been described with reference to the case where as the water supplying unit there is used the water pump 60, the water supplying unit may be a water supplying tank or an external water feed valve. Any units may be used so far as they can supply water for purging and reforming in the reformer 40.

While the present embodiment has been described with reference to the case where as the air supplying unit there is used the air pump 70, the air supplying unit may be, e.g., an air fan. Any units may be used so far as they can purge water or supply air necessary for the carbon monoxide remover.

While the present embodiment has been described with reference to the case where the fuel cell 10 is connected to the downstream of the three-way valve 27 with a pipe made of a fluororesin, the material of the pipe is not limited to fluororesin and is the same as that of the path disposed up the three-way valve 27. In this case, the length of the piping between the three-way valve 27 and the anode 10a of the fuel cell 10 can be sufficiently reduced to exert the same effect as mentioned above.

While the present embodiment has been described with reference to the case where when the fuel cell power generation system starts operation, the initial hydrogen-enriched gas is supplied into the burner 42 via the three-way valve 27 and the discharge path 45, the invention is not limited thereto. For example, the discharge path 45 may be opened to the exterior so that the initial hydrogen-enriched gas is discharged to the exterior through the discharge path 45 via the three-way valve 27. In this case, too, when the temperature in the reformer 40 and the carbon monoxide remover 47 has raised thoroughly, the three-way valve 27 may be operated to supply the hydrogen-enriched gas into the fuel cell 10.

While the present embodiment has been described with reference to the case where when the operation of the fuel cell is in suspension, the replacement of gases in the fuel path by water is followed by the closure of the shut-off valve 29, the shut-off valve 29 may not be closed or the shut-off valve 29 itself may be eliminated in the case where the interval between the suspension of the operation of the fuel cell power generation system and the subsequent starting of the operation of the fuel cell power generation system is short enough to cause no drying of the polymer electrolyte membrane or in the case where even when the polymer electrolyte membrane is dried, there is enough time until the subsequent starting of operation.

In the case where even when the polymer electrolyte membrane is dried, there is enough time until the subsequent starting of operation, the three-way valve 27 may be omitted. For the operation before starting, water is introduced from the reforming unit into the fuel cell 10 as in the case of the embodiment 2. Subsequently, the shut-off valve 54 is opened to supply the raw material gas into the burner 42. The reformer 40 is then heated over the burner 42 until the reforming reaction proceeds thoroughly to an extent such that the carbon monoxide removing catalyst 47a shows sufficient performance. When the temperature of the reformer 40 and the carbon monoxide remover 47 has reached the predetermined value, the raw material gas feed valve 53 is then opened to produce hydrogen-enriched gas in the reformer 40. The hydrogen-enriched gas which has been thoroughly freed of carbon monoxide may be then introduced into the fuel cell 10.

While the operation of the fuel cell is in suspension, water is introduced into the fuel gas feed pipe to replace the gases retained in the fuel gas feed pipe as in the case of the fuel cell power generation system shown in FIG. 2. Thereafter, the air pump 70 is operated to introduce air into the fuel gas feed pipe so that water retained in the fuel gas feed pipe is replaced by air.

While the present embodiment has been described with reference to the case where as a process for reforming the raw material gas there is employed a water vapor reforming process, a partial reforming process may be employed. This configuration is shown as still further embodiment in FIG. 4. In this case, the pipe 71 from the air pump 70 is branched directly to the pipe 74 to the carbon monoxide remover 47 and to the pipe 72 to the reformer 40. In this arrangement, air can be supplied into the reformer 40 also while the fuel cell power generation system is in operation. However, for the operation for shutting down the fuel cell power generation system, the operation of the air pump 70 is suspended. When the gases in the fuel gas feed pipe has been purged by water, the air pump 70 is again operated to replace water in the fuel gas feed pipe by air.

While the present embodiment has been described with reference to the case where water is introduced into the anode of the fuel cell before the starting of the operation of the fuel cell power generation system, it is not necessary that water be introduced into the anode of the fuel cell at the starting of the operation of the fuel cell so far as water has been introduced into the anode of the fuel cell while the operation of the fuel cell power generation system is suspension to keep the moisture of the electrolyte membrane at the starting of the operation of the fuel cell high enough to cause no troubles in the operation of the fuel cell. In the case where the fuel cell is of type other than polymer electrolyte membrane type such as solid oxide type, molten carbonate type and phosphoric acid type, it is not necessary that water be introduced into the fuel gas feed pipe at the starting of operation for purposes other than purging because there is no problem of drying of electrolyte membrane.

While the present embodiment has been described with reference to the case where water is supplied into the reformer 40 to introduce water into the polymer electrolyte type fuel cell 10, the fuel cell of the invention may be a fuel cell having a polymer electrolyte membrane moistening unit for introducing water directly into the fuel cell before the starting of operation so far as the polymer electrolyte membrane can be moistened. For example, when as the reforming means there is used a partial oxidation process, the water pump 60 may be merely able to supply water in an amount required to purge from the fuel gas feed pipe because there is no necessity of supplying water into the reforming unit. On the other hand, as the electrolyte moistening means there may be used a method merely capable of supplying water into the electrolyte membrane of the fuel cell in an amount required to prevent the drying thereof. Further, when as the raw material gas there is used hydrogen, the reformer 40, the transformer 48 and the carbon monoxide remover 47 are not needed, making it possible to reduce the inner capacity of the fuel path and hence use a water pump 60 having a lower performance for purging by water. Moreover, when the possibility of introduction of air from the exterior into the fuel path can be eliminated by closing the shut-off valve 26 (FIG. 1) at the outlet of the anode 10a, etc., it is thought that the water pump 60 is not needed.

While the present embodiment has been described with reference to the case where as the fuel cell there is used a polymer electrolyte type fuel cell, a phosphoric acid type fuel cell may be used. In this case, the operation at starting time is the same as in the fuel cell power generation system shown in FIG. 2. However, since there occurs no problem of drying of the polymer electrolyte membrane during the shut-down operation, purging by water may be followed by purging by air rather than by the operation of the three-way valve 27.

While the present embodiment has been described with reference to the case where the controller 80 has a computer constituted by hard wares, the controller 80 may be constituted by relays. Any other types of controllers may be used to exert the same effect so far as they can control the raw material gas feed valve 53, the shut-off valve 54, the burner 42, the water pump 60, the air pump 70, the air fan 11, the three-way valve 27, the three-way valve 73, etc. in sequence while the fuel cell power generation system of the invention is in operation or suspension.

In the aforementioned embodiments, the controller 80 may execute all the aforementioned controls or may comprise first to sixth controlling units for executing individual controls. Further, the controller 80 may also act as a part of the first to sixth controlling units and the other controlling units may be individually or integrally formed. In other words, the fuel cell power generation system according to the invention may have eight controlling units.

Further, in the aforementioned embodiments, when the interior of the fuel cell 10 is replaced by water which is then kept retained in the fuel cell 10 in cold places while the system is suspension, water can be frozen to disadvantage. On the contrary, it is effective to introduce water into the fuel cell 10 in warm and hot places or dry places at the starting time.

The invention will be further described with reference to the following non-limiting examples.

### EXAMPLE

In the present example, a fuel cell power generation system having the configuration shown in FIG. 2 was prepared. The method for operation of the fuel cell power generation system according to the invention was conducted.

### (1) Preparation of fuel cell

A particulate platinum having an average particle diameter of 30 angstrom was supported on an acetylene black-based carbon powder to obtain a catalyst (25 wt% platinum) for electrode. A dispersion of the catalyst powder in isopropanol was then mixed with a dispersion of a powdered perfluorocarbonsulfonic acid in ethyl alcohol to obtain a paste for catalyst layer. Separately, a carbon paper having a thickness of 300 µm was dipped in an aqueous dispersion of a polytetrafluoroethylene (PTFE), and then dried to obtain a water-repellent gas diffusion layer (porous electrode substrate). The paste for catalyst bed was applied to one surface of the gas diffusion layer, and then dried to obtain a cathode and an anode which are electrodes composed of catalyst layer and gas diffusion layer.

Subsequently, a polymer electrolyte membrane was provided interposed between the cathode and the anode with the catalyst layer positioned thereinside. The laminate thus obtained was then hot-pressed at a temperature of 110°C for 30 seconds to prepare MEA. As the polymer electrolyte membrane there was used a polymer electrolyte membrane (Nafion, produced by Du Pont, USA) having a thickness of 50µm made of a perfluorocarbonsulfonic acid.

As the electrically-conductive porous substrate constituting the gas diffusion layer there could be used a carbon cloth obtained by weaving carbon fiber which is a flexible material or a carbon felt obtained by molding a mixture of carbon fiber, carbon powder and organic binder besides the aforementioned carbon paper.

Subsequently, a carbon powder material was cold press-formed to obtain a carbon sheet. The carbon sheet thus obtained was then impregnated with a phenolic resin which was then heated and cured to provide enhanced sealing properties. The carbon sheet was then subjected to cutting to form a gas passage therein. Thus, a separator plate of the invention was obtained. Around the gas passage were provided a manifold aperture for supplying and discharging gas and a manifold aperture for supplying and discharging cooling water to be flown for controlling the temperature in the fuel cell. Besides the aforementioned carbon separator, a metallic separator plate having a gas passage and a manifold aperture formed in a metallic sheet made of stainless steel (SUS304) was prepared.

A gasket made of silicone rubber which is a gas sealing material was provided around MEA having an electrode area of 25 cm². MEA was disposed between two sheets of carbon separators or separators made of SUS304, and then clamped at a pressure of 20 kgf/cm² from both sides thereof to obtain two unit cells A and B.

A practical fuel cell normally comprises a lamination of a plurality of unit cells with a separator plate having a cooling water passage interposed therebetween. Accordingly, in the present example, cell stacks A and B each comprising a lamination of 100 units of unit cells A and B were used as fuel cells. In the present example, an external manifold type fuel cell was prepared. In the configuration used, a raw material gas is supplied into the anode via the external manifold while an oxidant gas is supplied into the cathode via the external manifold. However, an internal manifold type fuel cell, too, could be used in the invention.

### (2) Preparation of fuel cell power generation system

Subsequently, a fuel cell power generation system having the configuration shown in FIG. 2 was prepared.

The fuel cell 10 had a cathode 10b connected to an oxidant gas feed pipe 12 and a discharge pipe 13 at the inlet and outlet thereof, respectively. To the oxidant gas feed pipe 12 was connected an air fan 11.

On the other hand, to the inlet of the anode 10a was connected a fuel gas feed pipe 20 made of a polytetrafluoroethylene. The fuel gas feed pipe 20 comprised a fuel gas feed valve 21, a three-way valve 22 and a shut-off valve 23 provided therein. To the three-way valve 22 was connected a pipe 31 having a water pump 30. The three-way valve 22 was disposed as close to the fuel cell 10 as possible. The length of the pipe from the three-way valve 22 to the anode 10a of the fuel cell 10 was as short as possible. The anode 10a had a discharge pipe 25 connected thereto at the inlet thereof. The end of the discharge pipe 25 was open to the exterior. A shut-off valve 26 was provided midway along the discharge pipe 25.

A reformer 40 was provided up the fuel gas feed pipe 20. The interior of the reformer 40 was filled with a catalyst obtained by supporting Ru on a pelletized composite (diameter: 3 mm) obtained by sintering a mixture of Al₂O₃ and ZrO₂ as a reforming catalyst 40a. The reformer 40 was provided with a burner 42. The temperature of the reformer 40 was predetermined to be from 650°C to 700°C. The reformer 40 had a raw material gas feed pipe 50 having a desulfurizer 46 and a raw material gas feed valve 53 connected thereto at the inlet 40b thereof. To the raw material gas feed pipe 50 was connected a pipe 52 branched from the upstream of the raw material gas feed valve 53. The pipe 52 was connected to the burner 42 of the reformer 40 via a shut-off valve 54.

The reformer 40 also had a water feed pipe 61 having a water pump 60 connected thereto at the inlet 40b thereof. The reformer 40 further had an air feed pipe 71 having an air pump 70 connected thereto at the inlet 40b thereof via one outlet pipe 72 of a three-way valve 73. The other outlet pipe 74 of the three-way valve 73 was connected to a carbon monoxide remover 47.

The reformer 40 had the carbon monoxide removing unit 47 connected thereto downstream, i.e., between the reformer 40 and the fuel cell 10. The interior of the carbon monoxide remover 47 was filled with catalyst obtained by supporting Pt and Ru (1 : 1 by weight) on Al₂O₃ as a carbon monoxide removing catalyst 47a. The temperature of the carbon monoxide remover 47 was predetermined to be from 100°C to 150°C.

Provided between the reformer 40 and the carbon monoxide remover 47 was a transformer 48 which was filled with catalyst obtained by supporting platinum on a solid solution (diameter: 3 mm) containing 1 : 1 mixture (by weight) of CeO₂ and ZrO₂ as a transforming catalyst. The temperature of the transformer 48 was predetermined to be from 200°C to 250°C. The inlet of the anode 10a of the fuel cell 10 was connected to one outlet of the three-way valve 27.

The container of the reformer 40, the container of the carbon monoxide remover 47 and the transformer 48, the three-way valve 27, and the piping from the reformer 40 to the three-way valve 27 were all made of stainless steel SUS316.

The controller 80 comprised hard wares such as memory, arithmetic processor and interface to control the raw material gas feed valve 53, the shut-off valve 54, the burner 42, the water pump 60, the air pump 70, the air fan 11, the three-way valve 27, the three-way valve 73, the shut-off valve 28, etc. while the system is in operation or suspension.

The memory had a program stored therein for allowing the water pump 60 to introduce water into the inlet 40b of the reformer 40. This program contained the following commands by way of example:
a: Command allowing the water pump 60 to introduce water into the fuel gas feed pipe 20 via the reformer 40 to replace gases retained in the fuel gas feed pipe 20 by water after the suspension of the operation of the fuel cell 10;
b: Command allowing the water pump 60 to introduce water into the anode 10a via the reformer 40 and the fuel gas feed pipe 20 to keep the fuel cell power generation system with water retained in the anode 10a between after the suspension of the operation of the fuel cell 10 and before the beginning of the operation of the fuel cell 10;
c: Command that water should be introduced into the anode 10a to moisten the polymer electrolyte membrane before the beginning of the operation of the fuel cell 10;
d: Command that, after the suspension of the supply of a raw material gas from the raw material gas feed valve 53 into the reformer 40, water should be supplied from the water pump 60 into the reformer 40 to introduce water into the fuel gas feed pipe 20, thereby replacing the gases in the fuel gas feed pipe 20 by water;
after the replacement of the gases in the fuel gas feed pipe 20 by water, the three-way valve 27 should be operated to close the path from the three-way valve 27 to the fuel cell 10a along the fuel gas feed pipe 20 and open the discharge path 45; and
after the operation of the three-way valve 27, air should be introduced from the air pump 70 into the reformer 40 to replace water retained in the path from the reformer 40 to the three-way valve 27 along the fuel gas feed pipe 20 by air;
e: Command that, before the beginning of the operation of the fuel cell power generation system, water should be supplied from the water pump 60 into the reformer 40 to introduce water into the fuel cell 10 and the three-way valve 27 should be thereafter operated to close the path from the three-way valve 27 to the fuel cell 10 along the fuel gas feed pipe 20 and open the discharge path, the supply of the raw material gas from the raw material gas feed valve 53 should be started to produce hydrogen-enriched gas in the reformer 40, and, after the rise of the temperature of the carbon monoxide remover 47 to a value required to remove carbon monoxide from the hydrogen-enriched gas, the three-way valve 27 should be operated to close the discharge path and introduce the hydrogen-enriched gas freed of carbon monoxide into the fuel gas feed pipe 20;
f: Command that the gas from the anode 10a should be supplied into the burner 42; and
g: Command that the gas from the discharge path 45 should be supplied into the burner 42.

Accordingly, the controller 80 had the raw material gas feed valve 53, the shut-off valve 54, the burner 42, the water pump 60, the air pump 70, the air fan 11, the three-way valve 27, the three-way valve 73, the shut-off valve 28, etc. electrically connected thereto.

### (3) Beginning of operation of fuel cell power generation system

Subsequently, the operation of the fuel cell power generation system was started according to the operation method of the invention. The controller 80 was caused to give a command that the water pump 60 should be operated to introduce water from the inlet 40b into the reformer 40. At the same time, the controller 80 was caused to give a command that the shut-off valve 28 should be opened to open the fuel gas feed pipe 20 from the reformer 40 to the anode 10a of the fuel cell 10 via the transformer 48, the carbon monoxide remover 47 and the three-way valve 27 to the exterior. During this process, the discharge path 45 was closed by the three-way valve 27, and the path from the three-way valve 27 to the anode 10a of the fuel cell 10 was opened. The water which had been introduced into the reformer 40 was then directly introduced into the anode 10a.

The water which had been introduced into the anode 10a of the fuel cell 10 then provided the polymer electrolyte membrane with moisture high enough to allow the performance of the polymer electrolyte membrane. The water was then discharged to the exterior from the anode 10a of the fuel cell 10.

Subsequently, the controller 80 was caused to give a command that the shut-off valve 54 should be opened to introduce the raw material gas into the burner 42. At the same time with the introduction of the raw material gas, the burner 42 caught fire to heat the reformer 40.

Subsequently, the controller 80 was caused to give a command that the raw material gas feed valve 53 should be opened to introduce a city gas mainly composed of methane as a raw material gas into the desulfurizer 46. The city gas which had been introduced into the desulfurizer 46 was freed of sulfur content contained in its odorant component, and then supplied into the reformer 40 from the inlet 40b. When the city gas supplied into the reformer 40 and the water vapor produced by supplying water by the water pump 60 and then heating it over the burner 42 passed through the reforming catalyst 40a to cause reforming reaction resulting in the production of hydrogen-enriched gas. The hydrogen-enriched gas thus produced was introduced into the transformer 48 where the carbon monoxide content thereof was then reduced somewhat. The hydrogen-enriched gas was then passed to the carbon monoxide remover 47.

Subsequently, the controller 80 caused the air pump 70 to start to send air to the carbon monoxide remover 47 via the three-way valve 73. Carbon monoxide contained in the hydrogen-enriched gas was then selectively oxidized away in the carbon monoxide remover 47. During this process, the three-way valve 73 closed the path from the three-way valve 73 to the inlet 40b of the reformer 40 and opened the path from the three-way valve 73 to the carbon monoxide remover 47, preventing air from being passed to the reforming catalyst.

In the initial stage of the reforming reaction, since the temperature in the reformer 40 was not thoroughly raised, the reforming reaction didn't proceed thoroughly. Thus, hydrogen was not produced in an amount required for power generation reaction in the fuel cell 10. Further, since the temperature in the reformer 40 was not thoroughly raised, the temperature in the carbon monoxide remover 47, too, was not thoroughly raised, making it impossible to allow sufficient performance of the carbon monoxide removing catalyst 47a.

Accordingly, the initial hydrogen-enriched gas which had been produced in the reformer 40 showed a carbon monoxide concentration as high as about 5% at the outlet of the carbon monoxide remover 47 even after the passage through the transformer 48.

Then, the controller 80 caused the three-way valve 27 to operate before the production of hydrogen-enriched gas, i.e., before the opening of the raw material gas feed valve 53 to close the path from the three-way valve 27 to the anode 10a of the fuel cell 10 and open the discharge path 45. During this process, water vapor was kept retained in the anode 10a of the fuel cell 10.

Subsequently, the hydrogen-enriched gas which had been produced was immediately supplied via the discharge path 45 into the burner 42 where it was then combusted with the city gas until the temperature in the reformer 40 reached 700°C and the temperature in the carbon monoxide remover 47 reached 150°C.

Thereafter, a temperature sensor (not shown) in the reformer 40 detected that the temperature in the reformer 40 reached a value required for reforming and a temperature sensor (not shown) in the carbon monoxide remover 47 detected that the temperature of the carbon monoxide removing catalyst 47a in the carbon monoxide remover 47 reached a value required for removal of carbon monoxide. Subsequently, the controller 80 caused the three-way valve 27 to operate to close the discharge path 45 and open the fuel gas feed pipe 20 from the three-way valve 27 to the anode 10a of the fuel cell 10. At the same time, the controller 80 caused the shut-off valve 28 to be opened to supply the hydrogen-enriched gas which had been thoroughly freed of carbon monoxide by the carbon monoxide removing catalyst 47a into the anode 10a of the fuel cell 10.

While supplying hydrogen-enriched gas into the anode 10a of the fuel cell 10, the controller 80 gave a command that air should be supplied into the cathode 10b of the fuel cell 10 from the air fan 11. In the fuel cell 10, hydrogen in the fuel gas supplied into the anode 10a and oxygen in the air supplied into the cathode 10b reacted with each other to cause power generation.

The hydrogen-enriched gas left unreacted was discharged as an anode discharge gas from the outlet of the anode 10a of the fuel cell 10 via the discharge pipe 25, and then supplied into the burner 42 by the controller 80. The air left unreacted was then discharged from the cathode 10b of the fuel cell 10 via the discharge pipe 13.

In this operation, the fuel cell 10a was efficiently operated from the beginning (starting) of the operation of the fuel cell power generation system and the anode discharge gas was effectively utilized, making it possible to reduce the initial cost and running cost of the fuel cell power generation system.

### (4) Suspension of operation of fuel cell power generation system

Firstly, under a command given by the controller 80, the raw material gas feed valve 53 was closed to suspend the supply of city gas. At the same time, the shut-off valve 54 was closed to suspend the heating by the burner 42. During this process, the water pump 60 was continued to operate to supply the water from the water pump 60 into the reformer 40. The water which had been introduced into the reformer 40 was passed to the fuel gas feed pipe 20 via which it was then discharged to the exterior with the retained hydrogen-enriched gas from the outlet of the anode 10a of the fuel cell 10.

In this operation, the hydrogen-enriched gas retained in the fuel gas feed pipe 20 was purged by water. During this process, the air pump 70 was ordered by the controller 80 to suspend its operation so that air was not introduced into the fuel gas feed pipe 20. Thereafter, the controller 80 caused the water pump 60 to suspend the supply of water into the fuel gas feed pipe 20.

Subsequently, the controller 80 caused the three-way valve 27 to operate to close the path from the three-way valve 27 to the inlet of the anode 10a of the fuel cell 10 and open the path from the three-way valve 27 to the discharge path 45. At the same time, the controller 80 caused the shut-off valve 28 to be closed so that water was retained in the path from the three-way valve 27 to the shut-off valve 28 via the anode 10a of the fuel cell 10. By keeping the fuel cell under these conditions, the polymer electrolyte membrane was prevented from being dried and shrunk, making it possible to prevent the deterioration of its adhesivity to the electrode.

In accordance with the invention, a fuel cell power generation system which operates at a reduced initial cost and running cost can be provided. In accordance with the embodiment having a switching unit disposed down the reformer, the deterioration of the performance of the polymer electrolyte type fuel cell power generation system can be prevented.

In accordance with the embodiment involving reforming reaction in a water vapor reforming process, the initial cost can be further reduced. In accordance with the embodiment having a fuel cell connected thereto down the switching unit with a corrosion-resistant pipe, the deterioration of the performance of the fuel cell power generation system can be further prevented. In accordance with the embodiment involving the introduction of an anode discharge gas from the anode of the fuel cell into the heating unit, the safety of the system can be enhanced, making it possible to enhance the efficiency of the fuel cell power generation system. In accordance with the embodiment having a shut-off valve provided at the discharge port of the anode, the deterioration of the performance of the fuel cell power generation system can be prevented.

Although the present invention has been described in terms of the presently preferred embodiments, it is to be understood that such disclosure is not to be interpreted as limiting. Various alterations and reformings will no doubt become apparent to those skilled in the art to which the present invention pertains, after having read the above disclosure. Accordingly, it is intended that the appended claims be interpreted as covering all alterations and reformings as fall within the true spirit and scope of the invention.

## Claims

1. A fuel cell power generation system comprising;
a fuel cell having an anode, a cathode and a polymer electrolyte membrane;
a fuel gas feed pipe for supplying a fuel gas into said anode;
an oxidant gas feed pipe for supplying an oxidant gas into said cathode;
a reforming unit connected to said fuel gas feed pipe for reforming a raw material gas;
a heating unit for heating said reforming unit;
a raw material gas supplying unit for supplying said raw material gas into said reforming unit;
a water supplying unit for supplying water into said reforming unit;
an air supplying unit for supplying air into said reforming unit,
a water supplying path connecting said water supplying unit to at least one selected from the group consisting of said reforming unit, said fuel gas feed pipe, said oxidant gas feed pipe, said cathode and said anode;
a controlling unit for introducing water into at least one selected from the group consisting of said reforming unit, said fuel gas feed pipe, said oxidant gas feed pipe, said cathode and said anode.

2. The fuel cell power generation system in accordance with Claim 1, wherein said water supplying unit comprises a carburetor provided therein.

3. The fuel cell power generation system in accordance with claim 1 or claim 2, wherein said controlling unit causes said water supplying unit to introduce water into said fuel gas feed pipe and/or said anode to replace gases retained in said fuel gas feed pipe and/or said anode by water after the suspension of the operation of said fuel cell.

4. The fuel cell power generation system in accordance with any preceding claim, wherein said controlling unit causes said water supplying unit to introduce water into at least one of said anode and said cathode to keep said fuel cell power generation system with water retained on at least one of said anode and said cathode between after the suspension of the operation of said fuel cell and before the beginning of the operation of said fuel cell.

5. The fuel cell power generation system in accordance with any preceding claim, wherein said controlling unit introduces water into at least one of said anode and said cathode to moisten said polymer electrolyte membrane before the beginning of the operation of said fuel cell.

6. The fuel cell power generation system in accordance with any preceding claim, wherein there are provided a switching unit provided midway along said fuel gas feed pipe and a first discharge path branched from said fuel gas feed pipe, and
said controlling unit supplies water from said water supplying unit into said reforming unit after the suspension of the supply of said raw material gas from said raw gas supplying unit into said reforming unit to introduce water into said fuel gas feed pipe, thereby replacing gases in said gas feed pipe by water, causes said switching unit to operate after the replacement of gases in said gas feed pipe by water to close the path between said switching unit and said fuel cell along said fuel gas feed pipe and open the path from said reforming unit to said first discharge path via said switching unit, and introduces air from said air supplying unit to said reforming unit after the operation of said switching unit to replace water retained in the path between said reforming unit and said switching unit along said fuel gas feed pipe by air.

7. The fuel cell power generation system in accordance with any preceding claim, wherein there are provided a carbon monoxide removing unit disposed midway along said fuel gas feed pipe, a switching unit disposed down said carbon monoxide removing unit along said fuel gas feed pipe and a second discharge path branched from said fuel gas feed pipe via said switching unit, and
said controlling unit supplies water from said water supplying unit into said reforming unit before the beginning of the operation of said fuel cell power generation system to introduce water into said fuel cell, causes said switching unit to operate to close the path between said switching unit and said fuel cell along said fuel gas feed pipe and open the path from said reforming unit to said second discharge path via said switching unit, starts the supply of a raw material gas from said raw material gas supplying unit to produce a hydrogen-enriched gas in said reforming unit and causes said switching unit to operate after the rise of the temperature of said carbon monoxide removing unit to a value required to remove carbon monoxide from said hydrogen-enriched gas to close said second discharge path and introduce said hydrogen-enriched gas freed of carbon monoxide into said fuel gas feed pipe.

8. The fuel cell power generation system in accordance with any preceding claim, wherein there is provided an anode discharge gas connecting pipe for introducing gases discharged from said anode into said heating unit.

9. The fuel cell power generation system in accordance with Claim 6, wherein said first discharge path is connected to said heating unit.

10. The fuel cell power generation system in accordance with Claim 7, wherein said second discharge path is connected to said heating unit.

11. A method for operating a a fuel cell power generation system comprising a fuel cell having an anode, a cathode and a polymer electrolyte membrane, a fuel gas feed pipe for supplying a fuel gas into said anode, an oxidant gas feed pipe for supplying an oxidant gas into said cathode, a reforming unit connected to said fuel gas feed pipe for reforming a raw material gas, a heating unit for heating said reforming unit, a raw material gas supplying unit for supplying said raw material gas into said reforming unit, a water supplying unit for supplying water into said reforming unit, and an air supplying unit for supplying air into said reforming unit,
said method comprising the step of introducing water into at least one selected from the group consisting of said reforming unit, said fuel gas feed pipe, said oxidant gas feed pipe, said cathode and said anode.

12. A method for operating a fuel cell power generation system in accordance with Claim 11, wherein said water is hot water or water vapor.

13. A method for operating a a fuel cell power generation system in accordance with Claim 11 or Claim 12, comprising the steps of;
suspending the operation of said fuel cell, and
allowing said water supplying unit to introduce water into said fuel gas feed pipe and/or said anode to replace gases retained in said fuel gas feed pipe and/or said anode by water.

14. A method for operating a fuel cell power generation system in accordance with any one of claims 11 to 13, comprising the step of introducing water into at least one of said water supplying unit and said cathode to keep said fuel cell power generation system with water retained on at least one of said anode and said cathode between after the suspension of the operation of said fuel cell and before the beginning of the operation of said fuel cell.

15. A method for operating a fuel cell power generation system in accordance with any one of claims 11 to 14, comprising the step of introducing water into at least one of said anode and said cathode to moisten said polymer electrolyte membrane before the beginning of the operation of said fuel cell.

16. A method for operating a fuel cell power generation system in accordance with any one of claims 11 to 15, wherein said fuel cell power generation system comprises a switching unit provided midway along said fuel gas feed pipe and a first discharge path branched from said fuel gas feed pipe, and
said method comprising the steps of;
supplying water from said water supplying unit into said reforming unit after the suspension of the supply of a raw material gas from said raw material gas supplying unit into said reforming unit to introduce water into said fuel gas feed pipe, thereby replacing gases in said gas feed pipe by water;
allowing said switching unit to operate after the replacement of gases in said gas feed pipe by water to close the path between said switching unit and said fuel cell along said fuel gas feed pipe and open the path from said reforming unit to said first discharge path via said switching unit; and
introducing air from said air supplying unit to said reforming unit after the operation of said switching unit to replace water retained in the path between said reforming unit and said switching unit along said fuel gas feed pipe by air.

17. A method for operating ,a fuel cell power generation system in accordance with any one of claims 11 to 16, wherein said fuel cell power generation system comprises a carbon monoxide removing unit disposed midway along said fuel gas feed pipe, a switching unit disposed down said carbon monoxide removing unit along said fuel gas feed pipe and a second discharge path branched from said fuel gas feed pipe via said switching unit, and
said method comprising the steps of;
supplying water from said water supplying unit into said reforming unit before the beginning of the operation of said fuel cell power generation system to introduce water into said fuel cell and then allowing said switching unit to operate to close the path between said switching unit and said fuel cell along said fuel gas feed pipe and open the path from said reforming unit to said second discharge path via said switching unit;
starting the supply of a raw material gas from said raw material gas supplying unit to produce a hydrogen-enriched gas in said reforming unit; and
allowing said switching unit to operate after the rise of the temperature of said carbon monoxide removing unit to a value required to remove carbon monoxide from said hydrogen-enriched gas to close said second discharge path and introduce said hydrogen-enriched gas freed of carbon monoxide into said fuel gas feed pipe.

18. A method for operating a fuel cell power generation system in accordance with any one of claims 11 to 17, comprising the step of introducing gases discharged from said anode of said fuel cell into said heating unit.

19. A method of operating a fuel cell power generation system in accordance with Claim 16, comprising the step of introducing gases from said first discharge path into said heating unit.

20. A method for operating a fuel cell power generation system in accordance with Claim 17, comprising the step of introducing gases from said second discharge path into said heating unit.
